# EUROPEAN PATENT SPECIFICATION

(11) **EP 3 961 891 B1**
(45) Date of publication and mention of the grant of the patent: **20.11.2024**
(21) Application number: 20193792.7
(22) Date of filing: 01.09.2020
(51) Int. Cl.: H02M 1/42, H02M 1/00, H05B 45/38, H05B 45/3725, H05B 45/10, H05B 45/14, H05B 41/292

(54) **SUPPRESSION OF VISIBLE LIGHT OUTPUT FLUCTUATIONS OF LED CONVERTERS**
UNTERDRÜCKUNG VON SICHTBAREN LICHTAUSGANGSSCHWANKUNGEN VON LED-WANDLERN
SUPPRESSION DES FLUCTUATIONS DE SORTIE DE LUMIÈRE VISIBLE DE CONVERTISSEURS À DEL

(43) Date of publication of application: 02.03.2022
(73) Proprietor: Tridonic GmbH & Co. KG, 6851 Dornbirn (AT)
(72) Inventor: Auer, Hans, 6850 Dornbirn (AT); Egle, Manuel, 6850 Dornbirn (AT)
(74) Representative: Rupp, Christian

(56) References cited:
- US-A1- 2017 094 734
- US-B1- 10 554 122
- US-B1- 7 759 881

## Description

### Technical Field

The present invention relates to LED converters, and in particular to PFC-DC/DC converter systems operating under a low-load condition.

### Background

Known LED converter systems may employ a DC/DC converter stage for supply of a constant current to an LED load. Such a DC/DC converter may regulate against a ripple of its own supply voltage, which is usually provided by a power factor correction, PFC, converter.

Typically, the DC/DC converter is continuously busy with regulation of the LED current since a supply voltage from a PFC converter practically always exhibits some variation. This in turn ensures a particular level of variation of the LED current, resulting in little effective quantization of light output.

However, under a low-load condition, such as in dimming applications, there may be virtually no ripple on the supply voltage of the DC/DC converter. In response, the feedback control of a switched DC/DC converter may have a low frequency variation of the operation of the switch and thus show a low-frequency modulation behavior, causing an effective quantization of light output to become more noticeable. In other words, a less frequent variation of the LED current may translate into visible light flicker.

US 10,554,122 B1 discloses a two-stage power supply circuit including a power factor correction (PFC) circuit as a first stage. Based on an improved voltage sensing circuit, a low power consumption is achieved in a standby mode and in a normal steady-state mode, while maintaining a reasonably low overvoltage protection voltage threshold.

US 2017/094734 A1 discloses an LED converter comprising a boost regulator. The boost regulator includes a regulation band control circuit that controls a size of a regulation band of a load voltage based on a load current level.

US 7,759,881 B1 discloses a dimmable current-controlled LED converter.

### Summary of the Invention

The object of the present invention is to provide an LED converter capable of suppressing or at least reducing visible light flicker under low-load conditions.

The invention is defined by the appended independent claims. Preferred embodiments are set forth in the dependent claims and in the following description and drawings.

### Brief Description of the Drawings

Further aspects, advantages and objects of the invention will become evident for the skilled reader by means of the following detailed description of the embodiments of the invention, as illustrated in the enclosed drawings.
Fig. 1 illustrates an embodiment of an LED converter according to a first aspect, and an embodiment of a lighting system according to a second aspect;
Fig. 2 illustrates an embodiment of a closed-loop voltage control of the PFC converter; and
Fig. 3 illustrates a flow chart of a method according to a third aspect.

### Detailed Descriptions of Embodiments

The invention will now be described with respect to various embodiments. The features of these embodiments may be combined with each other unless specified otherwise.

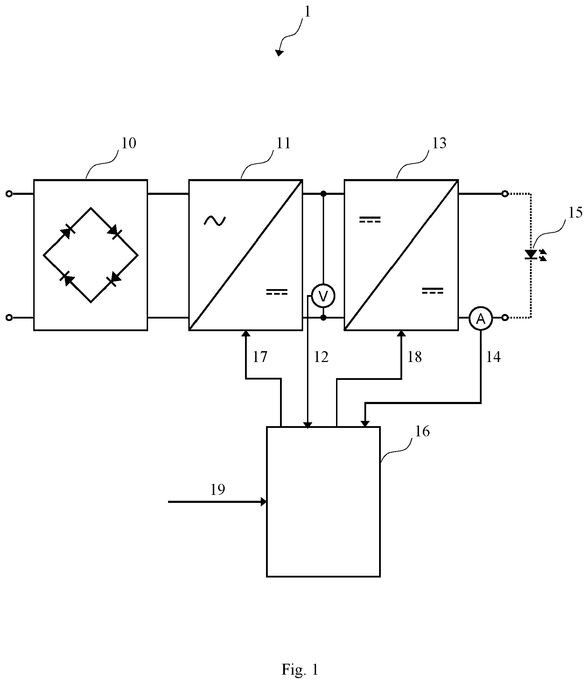

Fig. 1 illustrates an embodiment of an LED converter 1 according to a first aspect, and an embodiment of a lighting system 1, 15 according to a second aspect.

As used herein, an "LED converter" refers to an electronic power supply that efficiently converts electrical power, and in particular voltage and/or current characteristics, by controlling a transfer of electric power from a power source, such as an AC power grid, via at least one inductive power storage element, such as an inductor, to a power sink formed by at least one LED which is connectable to the electronic power supply. Said control is exercised by driving at least one power electronic switching element of the electronic power supply with an appropriate control signal.

With reference to Fig. 1, the LED converter 1 may comprise a rectifier stage 10, such as a diode bridge, supplied e.g. by an AC mains voltage, and providing full-wave rectification of said AC input/supply voltage.

With continued reference to Fig. 1, the LED converter 1 comprises a power factor correction, PFC, converter 11 providing a feedback-controlled output voltage 12, and a switched DC/DC converter 13 supplied by the output voltage 12 of the PFC converter 11 and providing a feedback-controlled output current 14 to output terminals of the LED converter 1, which are designed for supplying an LED load 15.

As used herein, a "power factor" refers to a measure of phase mismatch and/or distortion of an ideally sinusoidal current signal with respect to an (virtually) ideal sinusoidal voltage signal. With respect to electronic power supplies, the power factor denotes a ratio of real power to apparent power. A power factor of less than one indicates that voltage and current signals are not in phase and/or a presence of harmonic distortion.

As used herein, "power factor correction", PFC, refers to measures for increasing a power factor (close) to 1.

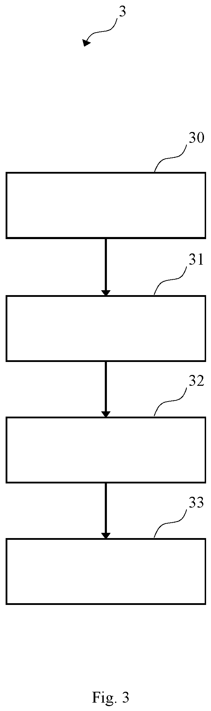

Fig. 1 further illustrates a control unit 16 of the LED converter 1 which is designed for operating the LED converter 1 by implementing a method 3 according to a third aspect or any of its embodiments, which will be explained in more detail in connection with Fig. 3 below. As such, the control unit 16 may be configured to communicate with the various entities of the LED converter 1, for example to receive a feedback signal representing the output voltage 12 of the PFC converter 11 and/or an feedback signal representing the output current 14 of the DC/DC converter 13.

The control unit 16 issues control signals 17, 18 e.g. for operating a switch of the (active) PFC 11, and for operating one or more switches of the switched DC/DC converter 13. The control unit 16 may implement:
- a feedback algorithm in order to determine e.g. the switching frequency of the switch of the PFC 11 based on the feedback signal representing the PFC output voltage 12, and
- a feedback algorithm in order to determine e.g. the switching frequency of the at least one switch of the switched DC/DC converter 13 based on the feedback signal representing the output current 14
in order to feedback control the respective values of the feedback signals to a nominal value. The nominal value for the output current 14 may be variable and e.g. supplied by a dimming signal 19 supplied to the control unit 16 in order to achieve a dimming of the light output of the LED load 15. Thus the converter can be put into a state of low load operation.

Those skilled in the art will appreciate that the control unit 16 may partially or completely be incorporated in the PFC converter 11 and/or the DC/DC converter 13, although it is illustrated as a separate entity in Fig. 1 for the sake of clarity. Further, the control unit 16 may be implemented as one integrated control unit, or a separate control units.

A symbol of a voltage meter shown in Fig. 1 at an output terminal of the PFC converter 11 indicates a sensing location of the output voltage 12 of the PFC converter 11. The output voltage 12 may be detected in known manner. For example, the output voltage 12 of the PFC converter 11 may be applied across a voltage/potential divider formed by a high-impedance resistor pair connected in series, and a voltage sensed across a low-side resistor of the divider may serve as an indication of the output voltage 12.

Similarly, a symbol of a current meter shown in Fig. 1 at an output terminal of the DC/DC converter 13 indicates a possible sensing location of the output current 14 of the DC/DC converter 13. Of course, the output current 14 may be detected in known manner, too. For example, the output current 14 of the DC/DC converter 13 may be passed through a shunt resistor having a very low but accurately known resistance, and a voltage sensed across the shunt resistor may serve as an indication of the output current 14. Those skilled in the art will appreciate that low-side current sensing as shown in Fig. 1 may be also substituted by high-side current sensing.

In combination with an LED load 15, which is indicated on a right-hand side of Fig. 1 and configured to be provided with the output current 14 of the LED converter 1, a lighting system according to a second aspect may be formed.

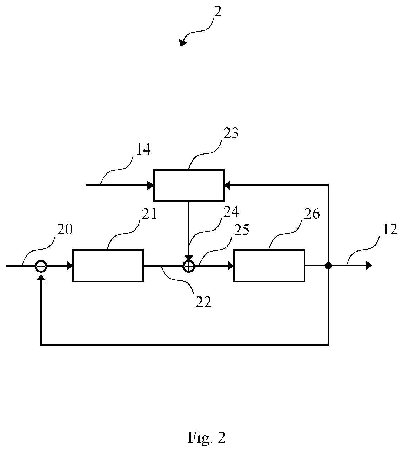

Fig. 2 illustrates an embodiment of a closed-loop (feedback) voltage control of the PFC converter 11.

As used herein, a "closed-loop control" refers to an arrangement in which a process/system is regulated by a controller having a requisite corrective behavior. A feedback loop ensures that the controller exercises a control action to manipulate a process variable to be the same as a reference variable.

As used herein, a "closed-loop voltage control" refers to closed-loop control of a voltage control process.

The PFC converter 11, i.e., its closed-loop voltage control, is configured to regulate a process variable, namely the output voltage 12 of the PFC converter 11, which is shown on a right-hand side of Fig. 2. To this end, the real (sensed) and feedback value of the process variable is subtracted from a preset nominal value 20 which serves as a reference variable (nominal value) for the output voltage 12, and the resulting control error is passed to a feedback control unit 21 of the PFC converter 11.

The feedback control unit 21 is configured to provide a control signal 22 for operating the switch of the PFC converter 11 such that the output voltage 12 is feedback-controlled to the preset nominal value 20. As such, the switch is part of the regulated process 26. Thus, the feedback control for the PFC results in a control signal 22 determining e.g. the switching frequency of the switch of the PFC.

As used herein, a "switch" refers to an active power electronic switch, such as a MOSFET switch.

A modulation unit 23 of the closed-loop voltage control of Fig. 2 is configured to modulate the control signal 22 with a modulation term 24 prior to supplying it to the switch, resulting in a modulated output voltage 12 of the PFC converter 11. Thus, in control theory terms, the modulation effected by the modulation unit 23 can be seen as a disturbance of the control signal 22.

As used herein and in accordance with Fig. 2, "modulation" of a signal refers to an addition or superposition of a modulation term to/on said signal.

Thereby, the control signal 22 may purposely be superimposed with the modulation term 24 to yield a modulated control signal 25.

A modulation amplitude of the modulation term 24 depends on an electrical power consumption parameter of the LED load 15 fed to the modulation unit 23. For example, the electrical power consumption parameter of the LED load 15 may be derived from the output voltage 12 of the PFC converter 11 and/or from the output current 14 of the DC/DC converter 13. More specifically, the electrical power consumption parameter may comprise a peak-to-peak value of the output voltage 12 of the PFC converter 11, and/or a mean value of the output current 14 of the DC/DC converter 13. Those skilled in the art will appreciate that low values of either of these electrical power consumption parameters indicate a low-load condition.

The modulation unit 23 of the closed-loop voltage control of Fig. 2 is configured to apply the modulation in the following ways:
*Either,* the modulation unit 23 is configured to selectively apply the modulation only when the value of the electrical power consumption parameter of the LED load 15 is below a preset threshold value.

So depending on the circumstances, the preset threshold value may comprise a fraction of a preset maximum peak-to-peak value of the output voltage 12 of the PFC converter 11, and/or a fraction of a preset nominal value of the output current 14 of the DC/DC converter 13.

Based on these preset threshold values, the modulation unit 23 may simply apply or activate the modulation under a low-load condition detected when the applicable electrical power consumption parameter falls below the corresponding preset threshold value, and not apply or deactivate the modulation under a normal load condition detected when the applicable electrical power consumption parameter exceeds the corresponding preset threshold value.

*Or*, the modulation unit 23 is configured to apply a higher modulation amplitude at lower values of the electrical power consumption parameter of the LED load 15 compared to the modulation amplitude at higher values thereof.

In particular, the modulation amplitude may be an arbitrary strictly monotonic decreasing function with increasing electrical power consumption parameter. Non-limiting examples comprise linearly, polynomially, logarithmically, or negative exponentially decreasing functions with increasing electrical power consumption parameter, with or without further terms such as constants, for example.

Thereby, a variation/modulation at the input of the DC/DC converter 13 is increased under low-load conditions, and so is a regulation activity of the DC/DC converter 13, which in turn reduces the effective output quantization. That is to say, the added modulation at the input of the DC/DC converter 13 spreads the quantization noise of the DC/DC output current over a wider frequency range. In other words, a more frequent variation of the LED current 14 may suppress visible light flicker.

A modulation frequency of the modulation term 24 may be higher than an inverse of a time constant of the closed-loop voltage control of the PFC converter 11 by at least a preset factor.

As used herein, a "time constant" *τ* refers to a parameter characterizing a (speed of) response of a process/system to a step input. As such, the time constant *τ* of a closed-loop control is given by design/dimensioning and indicates how long it takes for the process variable to respond to a changing output of the feedback control unit.

The time constant *τ* is inherently related to a cut-off frequency *f_{c}* = *1*/*(2πτ)*, a well-known boundary in said process/system's frequency response at which an energy flow through the system begins to be reduced rather than passing through. Correspondingly, the faster changes occur in relation to the time constant *τ* or the cut-off frequency *f_{c}*, the less will the process/system be able to respond.

As a result, the closed-loop voltage control of the PFC converter 11 having a time constant *τ* will not be able to eliminate modulation frequencies which are significantly higher (e.g., by a preset factor C) than the inverse of the time constant *1*/*τ*, or - equivalently - modulation frequencies which are significantly higher (e.g., by a preset factor *C*/*(2π)* than the cut-off frequency *f_{c}* = *1*/*(2πτ).*

Thereby, the output voltage 12 of the PFC converter 11 may purposely be modulated by adding a modulation term having an appropriately chosen modulation frequency.

When the PFC converter 11 is provided with a DC input voltage, the PFC converter 11 may be configured to sweep an ON-time of a duty cycle of the control signal 22.

Thereby, electromagnetic interference, EMI, may be mitigated during DC operation.

In the alternative, when the PFC converter 11 is provided with an AC input voltage, the PFC converter 11 may be configured to increase the ON-time of the duty cycle of the control signal 22 in a temporal vicinity of zero-crossings of the AC input voltage.

Thereby, total harmonic distortion, THD may be corrected during AC operation.

As used herein, "total harmonic distortion" refers to a measure of harmonic distortion present in a signal, such as a voltage, for example. THD correction refers to measures for decreasing a power factor (close) to 0.

Because THD correction is virtually inactive under a low-load condition, no performance penalty will be faced when simultaneously applying or activating the modulation.

Fig. 3 illustrates a flow chart of a method 3 according to a third aspect.

The method 3 is for operating an LED converter 1 according to the first aspect, such as the LED converter 1 of Fig. 1 in combination with Fig. 2.

The method 3 comprises providing 30 a feedback-controlled output voltage 12 by providing a control signal 22 for operating a switch of the PFC converter 11 such that the output voltage 12 is feedback-controlled to a preset nominal value 20.

The method 3 further comprises providing 31, based on supply of the output voltage 12, a feedback-controlled output current 14 to output terminals of the LED converter 1 being designed for supplying an LED load 15.

The method 3 further comprises modulating 32 the control signal 22 with a modulation term 24 prior to supplying it to the switch, resulting in a modulated output voltage 12 of the PFC converter 11. A modulation amplitude of the modulation term 24 depends on an electrical power consumption parameter of the LED load 15 fed to the modulation unit 23.

The method 3 further comprises selectively applying 33 the modulation only when the value of the electrical power consumption parameter of the LED load 15 is below a preset threshold value, or applying 33 a higher modulation amplitude at lower values of the electrical power consumption parameter of the LED load 15 compared to the modulation amplitude at higher values thereof.

The method 3 may be performed by an LED converter 1 according to the first aspect or any of its embodiments.

Accordingly, the advantages mentioned in connection with the various embodiments of the LED converter 1 of the first aspect apply similarly to the corresponding embodiments of the method 3 according to the third aspect.

## Claims

1. An LED converter (1), comprising:
a power factor correction, PFC, converter (11) configured to provide a feedback-controlled output voltage (12), and
a switched DC/DC converter (13) supplied by the output voltage (12) of the PFC converter (11) and configured to provide a feedback-controlled output current (14) to output terminals of the LED converter (1),
the output terminals being designed for supplying an LED load (15),
the PFC converter (11) comprising
a feedback control unit (21) configured to provide a control signal (22) for operating a switch of the PFC converter (11) such that the output voltage (12) is feedback-controlled to a preset nominal value, and
a modulation unit (23) configured to modulate the control signal (22) by superposition with a modulation term (24), having a modulation frequency and a modulation amplitude, prior to supplying it as a modulated control signal (25) for operating the switch, resulting in a modulated output voltage (12) of the PFC converter (11),
wherein the modulation amplitude of the modulation term (24) depends on an electrical power consumption parameter of the LED load (15) fed to the modulation unit (23); and
wherein the modulation unit (23) is further configured to:
selectively apply the modulation only when the value of the electrical power consumption parameter of the LED load (15) is below a preset threshold value, or
apply a higher modulation amplitude at lower values of the electrical power consumption parameter of the LED load (15) compared to the modulation amplitude at higher values thereof; and
wherein the modulation frequency of the modulation term (24) is higher than an inverse of a time constant τ of a closed-loop voltage control of the PFC converter (11) by at least a preset factor (C).

2. The LED converter (1) of claim 1,
wherein the electrical power consumption parameter comprises a mean value of the output current (14) of the DC/DC converter (13); and
wherein the preset threshold value comprises a fraction of a preset nominal value of the output current (14) of the DC/DC converter (13).

3. The LED converter (1) of claim 1 or claim 2,
wherein the electrical power consumption parameter comprises a peak-to-peak value of the output voltage (12) of the PFC converter (11); and
wherein the preset threshold value comprises a fraction of a preset maximum peak-to-peak value of the output voltage (12) of the PFC converter (11).

4. The LED converter (1) of one of claims 1 to 3,
wherein when the PFC converter (11) is provided with a DC input voltage, the PFC converter (11) is configured to sweep an ON-time of a duty cycle of the control signal (22).

5. The LED converter (1) of one of claims 1 to 4,
wherein when the PFC converter (11) is provided with an AC input voltage, the PFC converter (11) is configured to increase the ON-time of the duty cycle of the control signal (22) in a temporal vicinity of zero-crossings of the AC input voltage.

6. A lighting system, comprising:
an LED converter (1) of one any of claims 1 to 5, and
an LED load (15) configured to be provided with the output current (14) of the LED converter (1).

7. A method (3) of operating an LED converter (1), comprising:
providing (30) a feedback-controlled output voltage (12) by providing a control signal (22) for operating a switch of the PFC converter (11) such that the output voltage (12) is feedback-controlled to a preset nominal value (20);
based on supply of the output voltage (12), providing (31) a feedback-controlled output current (14) to output terminals of the LED converter (1) being designed for supplying an LED load (15);
modulating (32) the control signal (22) by superposition with a modulation term (24), having a modulation frequency and a modulation amplitude, prior to supplying it as a modulated control signal (25) for operating the switch, resulting in a modulated output voltage (12) of the PFC converter (11),
wherein the modulation amplitude of the modulation term (24) depends on an electrical power consumption parameter of the LED load (15) fed to the modulation unit (23); and
selectively applying (33) the modulation only when the value of the electrical power consumption parameter of the LED load (15) is below a preset threshold value, or
applying (33) a higher modulation amplitude at lower values of the electrical power consumption parameter of the LED load (15) compared to the modulation amplitude at higher values thereof; and
wherein the modulation frequency of the modulation term (24) is higher than an inverse of a time constant τ of a closed-loop voltage control of the PFC converter (11) by at least a preset factor (C).

8. The method (3) of claim 7,
wherein the method (3) is performed by an LED converter (1) of any one of claims 2 to 5.

## Patentansprüche

1. LED-Wandler (1), umfassend:
einen Leistungsfaktorkorrekturwandler, PFC-Wandler, (11), der konfiguriert ist, um eine rückkopplungsgesteuerte Ausgangsspannung (12) bereitzustellen, und
einen geschalteten DC/DC-Wandler (13), der von der Ausgangsspannung (12) des PFC-Wandlers versorgt wird (11) und konfiguriert ist, um einen rückkopplungsgesteuerten Ausgangsstrom (14) an Ausgangsanschlüsse des LED-Wandlers (1) bereitzustellen,
wobei die Ausgangsanschlüsse zum Liefern einer LED-Last (15) ausgelegt sind,
PFC-Wandler (11), umfassend
eine Rückkopplungssteuereinheit (21), die konfiguriert ist, um ein Steuersignal (22) zum Bedienen eines Schalters des PFC-Wandlers (11) bereitzustellen, derart, dass die Ausgangsspannung (12) auf einen voreingestellten Nennwert rückkopplungsgesteuert wird, und
eine Modulationseinheit (23), die konfiguriert ist, um das Steuersignal (22) durch Überlagerung mit einem Modulationsterm (24), der eine Modulationsfrequenz und eine Modulationsamplitude aufweist, zu modulieren, bevor es als moduliertes Steuersignal (25) zum Bedienen des Schalters geliefert wird, was zu einer modulierten Ausgangsspannung (12) des PFC-Wandlers (11) führt,
wobei die Modulationsamplitude des Modulationsterms (24) von einem Verbrauchsparameter der elektrischen Leistung der LED-Last (15) abhängt, der der Modulationseinheit (23) zugeführt wird; und
wobei die Modulationseinheit (23) ferner konfiguriert ist zum:
selektiven Anwenden der Modulation nur wenn der Wert des Verbrauchsparameters der elektrischen Leistung der LED-Last (15) unter einem voreingestellten Schwellenwert liegt, oder
Anwenden einer höheren Modulationsamplitude bei niedrigeren Werten des Verbrauchsparameters der elektrischen Leistung der LED-Last (15) im Vergleich zu der Modulationsamplitude bei höheren Werten davon; und
wobei die Modulationsfrequenz des Modulationsterms (24) um mindestens einen voreingestellten Faktor (C) höher als ein Kehrwert einer Zeitkonstante τ einer geschlossenen Spannungsregelung des PFC-Wandlers (11) ist.

2. LED-Wandler (1) nach Anspruch 1,
wobei der Verbrauchsparameter der elektrischen Leistung einen Mittelwert des Ausgangsstroms (14) des DC/DC-Wandlers (13) umfasst; und
wobei der voreingestellte Schwellenwert einen Bruchteil eines voreingestellten Nennwerts des Ausgangsstroms (14) des DC/DC-Wandlers (13) umfasst.

3. LED-Wandler (1) nach Anspruch 1 oder 2,
wobei der Verbrauchsparameter der elektrischen Leistung einen Spitze-zu-Spitze-Wert der Ausgangsspannung (12) des PFC-Wandlers (11) umfasst; und
wobei der voreingestellte Schwellenwert einen Bruchteil eines voreingestellten maximalen Spitze-zu-Spitze-Werts der Ausgangsspannung (12) des PFC-Wandlers (11) umfasst.

4. LED-Wandler (1) nach einem der Ansprüche 1 bis 3,
wobei, wenn der PFC-Wandler (11) mit einer DC-Eingangsspannung versehen wird, der PFC-Wandler (11) konfiguriert ist, um eine EIN-Zeit eines Arbeitszyklus des Steuersignals (22) zu überstreichen.

5. LED-Wandler (1) nach einem der Ansprüche 1 bis 4,
wobei, wenn der PFC-Wandler (11) mit einer AC-Eingangsspannung versehen wird, der PFC-Wandler (11) konfiguriert ist, um die EIN-Zeit des Arbeitszyklus des Steuersignals (22) in einer zeitlichen Nähe von Nulldurchgängen der AC-Eingangsspannung zu erhöhen.

6. Beleuchtungssystem, umfassend:
einen LED-Wandler (1) nach einem der Ansprüche 1 bis 5, und
eine LED-Last (15), die konfiguriert ist, um mit dem Ausgangsstrom (14) des LED-Wandlers (1) versehen zu werden.

7. Verfahren (3) zum Betreiben eines LED-Wandlers (1), umfassend:
Bereitstellen (30) einer rückkopplungsgeregelten Ausgangsspannung (12) durch Bereitstellen eines Steuersignals (22) zum Bedienen eines Schalters des PFC-Wandlers (11), derart, dass die Ausgangsspannung (12) auf einen voreingestellten Nennwert (20) rückkopplungsgeregelt wird;
basierend auf der Lieferung der Ausgangsspannung (12), Bereitstellen (31) eines rückkopplungsgesteuerten Ausgangsstroms (14) an Ausgangsanschlüsse des LED-Wandlers (1), der zum Liefern einer LED-Last (15) ausgelegt ist;
Modulieren (32) des Steuersignals (22) durch Überlagerung mit einem Modulationsterm (24), der eine Modulationsfrequenz und eine Modulationsamplitude aufweist, bevor es als moduliertes Steuersignal (25) zum Bedienen des Schalters geliefert wird, was zu einer modulierten Ausgangsspannung (12) des PFC-Wandlers (11) führt,
wobei die Modulationsamplitude des Modulationsterms (24) von einem Verbrauchsparameter der elektrischen Leistung der LED-Last (15) abhängt, der der Modulationseinheit (23) zugeführt wird; und
selektives Anwenden (33) der Modulation nur wenn der Wert des Verbrauchsparameters der elektrischen Leistung der LED-Last (15) unter einem voreingestellten Schwellenwert liegt, oder
Anwenden (33) einer höheren Modulationsamplitude bei niedrigeren Werten des Verbrauchsparameters der elektrischen Leistung der LED-Last (15) im Vergleich zu der Modulationsamplitude bei höheren Werten davon; und
wobei die Modulationsfrequenz des Modulationsterms (24) um mindestens einen voreingestellten Faktor (C) höher als ein Kehrwert einer Zeitkonstante τ einer geschlossenen Spannungsregelung des PFC-Wandlers (11) ist.

8. Verfahren (3) nach Anspruch 7,
wobei das Verfahren (3) von einem LED-Wandler (1) nach einem der Ansprüche 2 bis 5 durchgeführt wird.

## Revendications

1. Convertisseur de DEL (1), comprenant :
un convertisseur à correction du facteur de puissance, PFC, (11) configuré pour fournir une tension de sortie (12) commandée par rétroaction, et
un convertisseur CC/CC (13) commuté alimenté par la tension de sortie (12) du convertisseur à PFC (11) et configuré pour fournir un courant de sortie (14) commandé par rétroaction aux bornes de sortie du convertisseur de DEL (1),
les bornes de sortie étant conçues pour alimenter une charge de DEL (15),
le convertisseur à PFC (11), comprenant
une unité de commande à rétroaction (21) configurée pour fournir un signal de commande (22) afin d'actionner un commutateur du convertisseur à PFC (11) de manière que la tension de sortie (12) soit commandée par rétroaction à une valeur nominale prédéfinie, et
une unité de modulation (23) configurée pour moduler le signal de commande (22) par superposition avec un terme de modulation (24), ayant une fréquence de modulation et une amplitude de modulation, avant de le fournir en tant que signal de commande modulé (25) pour actionner le commutateur, résultant en une tension de sortie (12) modulée du convertisseur à PFC (11),
dans lequel l'amplitude de modulation du terme de modulation (24) dépend d'un paramètre de consommation d'énergie électrique de la charge de DEL (15) qui alimente l'unité de modulation (23) ; et
dans lequel l'unité de modulation (23) est en outre configurée pour :
appliquer sélectivement la modulation uniquement lorsque la valeur du paramètre de consommation d'énergie électrique de la charge de DEL (15) est inférieure à une valeur de seuil prédéfinie, ou
appliquer une amplitude de modulation plus élevée aux valeurs inférieures du paramètre de consommation d'énergie électrique de la charge de DEL (15) par comparaison avec l'amplitude de modulation aux valeurs supérieures de celui-ci ; et
dans lequel la fréquence de modulation du terme de modulation (24) est supérieure à l'inverse d'une constante de temps τ d'une commande de tension en boucle fermée du convertisseur à PFC (11) d'au moins un facteur prédéfini (C).

2. Convertisseur de DEL (1) selon la revendication 1,
dans lequel le paramètre de consommation d'énergie électrique comprend une valeur moyenne du courant de sortie (14) du convertisseur CC/CC (13) ; et
dans lequel la valeur de seuil prédéfinie comprend une fraction d'une valeur nominale prédéfinie du courant de sortie (14) du convertisseur CC/CC (13).

3. Convertisseur de DEL (1) selon la revendication 1 ou la revendication 2,
dans lequel le paramètre de consommation d'énergie électrique comprend une valeur crête à crête de la tension de sortie (12) du convertisseur à PFC (11) ; et
dans lequel la valeur de seuil prédéfinie comprend une fraction d'une valeur maximale crête à crête prédéfinie de la tension de sortie (12) du convertisseur à PFC (11).

4. Convertisseur de DEL (1) selon l'une quelconque des revendications 1 à 3,
dans lequel, lorsque le convertisseur à PFC (11) est pourvu d'une tension d'entrée CC, le convertisseur à PFC (11) est configuré pour balayer un temps d'activation d'un cycle de service du signal de commande (22).

5. Convertisseur de DEL (1) selon l'une quelconque des revendications 1 à 4,
dans lequel, lorsque le convertisseur à PFC (11) est alimenté par une tension d'entrée CA, le convertisseur à PFC (11) est configuré pour augmenter le temps d'activation du cycle de service du signal de commande (22) à proximité temporelle des passages à zéro de la tension d'entrée CA.

6. Système d'éclairage, comprenant :
un convertisseur de DEL (1) selon l'une des revendications 1 à 5, et
une charge de DEL (15) configurée pour être fournie avec le courant de sortie (14) du convertisseur de DEL (1).

7. Procédé (3) de fonctionnement d'un convertisseur de DEL (1), consistant à :
fournir (30) une tension de sortie (12) commandée par rétroaction en fournissant un signal de commande (22) pour faire fonctionner un commutateur du convertisseur à PFC (11) de sorte que la tension de sortie (12) est commandée par rétroaction à une valeur nominale prédéfinie (20) ;
sur la base de la tension de sortie (12), fournir (31) un courant de sortie (14) commandé par rétroaction aux bornes de sortie du convertisseur de DEL (1) conçu pour alimenter une charge de DEL (15) ;
moduler (32) le signal de commande (22) par superposition avec un terme de modulation (24), ayant une fréquence de modulation et une amplitude de modulation, avant de le fournir en tant que signal de commande modulé (25) pour actionner le commutateur, résultant en une tension de sortie (12) modulée du convertisseur à PFC (11),
dans lequel l'amplitude de modulation du terme de modulation (24) dépend d'un paramètre de consommation d'énergie électrique de la charge de DEL (15) qui alimente l'unité de modulation (23) ; et
appliquer (33) sélectivement la modulation uniquement lorsque la valeur du paramètre de consommation électrique de la charge de DEL (15) est inférieure à une valeur de seuil prédéfinie, ou
appliquer (33) une amplitude de modulation plus élevée aux valeurs inférieures du paramètre de consommation d'énergie électrique de la charge de DEL (15) par comparaison avec l'amplitude de modulation aux valeurs supérieures de celui-ci ; et
dans lequel la fréquence de modulation du terme de modulation (24) est supérieure à l'inverse d'une constante de temps τ d'une commande de tension en boucle fermée du convertisseur à PFC (11) d'au moins un facteur prédéfini (C).

8. Procédé (3) selon la revendication 7,
dans lequel le procédé (3) est exécuté par un convertisseur de DEL (1) selon l'une quelconque des revendications 2 à 5.
